# EUROPÄISCHE PATENTSCHRIFT

(11) **EP 0 756 987 B1**
(45) Veröffentlichungstag und Bekanntmachung des Hinweises auf die Patenterteilung: **08.03.2000**
(21) Anmeldenummer: 96111341.2
(22) Anmeldetag: 13.07.1996
(51) Int. Cl.: B62D 49/08

(54) **Zusatzgewicht zur Aufnahme durch ein fahrzeugseitiges Tragelement**
Counterweight for attachment to a supporting element of a vehicle
Contrepoids pour le logement sur un élément de support d'un véhicule

(30) Priorität: 03.08.1995 DE 19528473
(43) Veröffentlichungstag der Anmeldung: 05.02.1997
(73) Patentinhaber: DEERE & COMPANY, Moline, Illinois 61265-8098 (US)
(72) Erfinder: Teich, Michael, 68199 Mannheim (DE)
(74) Vertreter: Feldmann, Bernhard

(56) Entgegenhaltungen:
- DE-A- 1 941 316

## Beschreibung

Die Erfindung betrifft ein Zusatzgewicht zur Ballastierung eines landwirtschaftlichen oder industriellen Fahrzeugs, insbesondere eines Ackerschleppers, das wenigstens eine durch einen oberen Schenkel und einen unteren Schenkel begrenzte, seitlich offene Einführöffnung aufweist, und das an ein fahrzeugseitiges Tragelement, beispielsweise an ein frontseitiges Grundgewicht, anhängbar ist, indem sich der obere Schenkel des Zusatzgewichtes auf dem in die Einführöffnung hineinragenden Tragelement abstützt, wobei sich in dem oberen Schenkel und dem unteren Schenkel des Zusatzgewichtes wenigstens teilweise miteinander fluchtende, im wesentlichen senkrecht ausgerichtete Ausnehmungen erstrecken, die im eingehängten Zustand mit einer im wesentlichen senkrechten Aufnahmeausnehmung im Tragelement korrespondieren und die einen Befestigungsbolzen aufnehmen. Derartige Zusatzgewichte sind aus der DE-C-1 941 316 bekannt.

Zur Ballastierung eines Ackerschleppers werden üblicherweise plattenförmige Ballastgewichte verwendet, die an ein fahrzeugseitiges Tragelement in Querrichtung lamellenartig nebeneinander anhängbar und festlegbar sind. Derartige Ballastgewichte wurden beispielsweise in der DE-C-1 941 316 beschrieben. Der Befestigung dient eine am Tragelement vorgesehene vertikale Halterung, beispielsweise ein Bolzen, der durch jeweils eine halbzylindrische, vertikale Rille der beiden zum Bolzen benachbarten Ballastgewichte aufgenommen wird. Die Ballastgewichte werden nach dem Anhängen an das Tragelement durch Spannschrauben miteinander verschraubt, die sich durch quer durch alle Ballastgewichte verlaufende Bohrungen erstrecken. Die Befestigung zwischen dem Tragelement und den Ballastgewichten ist nicht spielfrei, so daß auf das Fahrzeug einwirkende Stöße oder Schwingungen eine Relativbewegung zwischen dem Tragelement und den Ballastgewichten verursachen, die die Auswirkungen der Schwingungen und Stöße verstärken und eine Geräuschquelle darstellen können.

Die plattenförmigen Ballastgewichte wiegen häufig ca. 50 kg und lassen sich somit nur mühsam handhaben. Es werden daher in der Praxis auch einteilige Zusatzgewichte verwendet, die durch Hubgeräte aufnehmbar sind. Solche einteiligen Zusatzgewichte enthalten seitlich vorstehende Bolzen, die durch eine frontseitige oder heckseitige Anhängevorrichtung des Schleppers aufgenommen werden können. Während der Durchführung der Arbeiten verbleiben die Ballastgewichte an der Anhängevorrichtung. Eine geeignete Anhängevorrichtung ist jedoch nicht immer vorhanden. Ferner ist es häufig wünschenswert, daß die Anhängevorrichtung oder deren Betätigungselemente beim Arbeiten verfügbar sind und nicht durch eine Gewichtaufnahme beansprucht werden.

Die der Erfindung zugrunde liegende Aufgabe wird darin gesehen, ein Zusatzgewicht der eingangs genannten Art anzugeben, bei dem die genannten Probleme überwunden werden. Insbesondere soll das Zusatzgewicht einfach und sicher handhabbar sein und eine spielfreie Befestigung an einem Tragelement des Fahrzeugs ermöglichen.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Für ein Zusatzgewicht, wie es eingangs bezeichnet wurde, wird vorgeschlagen, als Befestigungsbolzen eine Befestigungsschraube zu verwenden, die sich durch ihren Schraubenkopf am oberen Schenkel axial abstützt. In der Ausnehmung des unteren Schenkels ist ein axial verschiebbares Spannteil angeordnet, welches eine Gewindebohrung enthält, in die die Befestigungsschraube einschraubbar ist.

Zur Befestigung des Zusatzgewichtes an dem Tragelement wird das Zusatzgewicht an das Tragelement angenähert, so daß ein freies Ende des Tragelements in die Einführöffnung des Zusatzgewichtes eingreift und die beiden Ausnehmungen des Zusatzgewichtes mit einer Aufnahmeausnehmung des Tragelements fluchten. Dann wird die Befestigungsschraube durch die Ausnehmung des oberen Schenkels und die Einführausnehmung des Zusatzgewichts gesteckt und in die Gewindebohrung des Spannteils eingeschraubt. Dabei wird das Spannelement nach oben gezogen. Es nähert sich dem Tragelement an und klemmt dieses zwischen dem oberen Schenkel und dem Spannteil ein.

Als Zusatzgewicht wird vorzugsweise ein einteilig handhabbares Gewicht verwendet, das durch geeignete Hubmittel, beispielsweise durch eine 3-Punkt-Anhängevorrichtung des Fahrzeugs anhebbar ist. Aus gießtechnischen Gründen ist es vorteilhaft das Zusatzgewicht mehrteilig, vorzugsweise dreiteilig auszubilden, um die Abkühldauer nach dem Gießen in vertretbaren Grenzen zu halten. Dabei können drei nebeneinander angeordnete, miteinander dauerhaft befestigte Teilgewichte verwendet werden, wobei sich die in den oberen und unteren Schenkeln erstreckenden Ausnehmungen im mittleren Teilgewicht befinden.

Das erfindungsgemäße Zusatzgewicht ist einfach und sicher handhabbar und ermöglicht eine spielfreie Befestigung an einem Tragelement des Fahrzeugs. Wenn sich das Spannteil in seiner abgesenkten Lage befindet, stellt die Einführöffnung einen großen Freiraum für den Einhängevorgang bereit.

Gemäß einer bevorzugten Weiterbildung der Erfindung ist das Spannteil eine wenigstens abschnittsweise zylindrische ausgebildete Schraubbüchse, die in einer wenigstens teilweise zylindrisch ausgebildeten Ausnehmung im unteren Schenkel axial verschiebbar angeordnet ist. Die nach oben weisende Fläche der Schraubbüchse ist größer als der Querschnitt der Aufnahmeausnehmung im Tragelement, so daß sich die Schraubbüchse am Randbereich der Aufnahmeausnehmung abstützen kann. Zu diesem Zweck kann die Schraubbüchse eine sich oben erweiternde Fläche oder ein Zwischenbauteil tragen. Ein geringer Fertigungsaufwand ist jedoch durch eine zylindrische Schraubbüchse gegeben, deren Durchmesser über die Länge der Schraubbüchse konstant und größer ist als der Durchmesser der Aufnahmeausnehmung im Tragelement.

Es sind zweckmäßigerweise Mittel vorgesehen, die das Spannteil gegen Verdrehung sichern. Hierzu eignet sich eine in die Eintrittsöffnung hineinragende, am oberen Abschnitt des Spannteils befestigte Lasche, die mit einer seitlichen Wandung der Einführöffnung in Eingriff tritt und ein Verdrehen des Spannteils bei dessen axialer Verschiebung verhindert. Da diese Lasche über die Ausnehmung im unteren Schenkel hinausragt, begrenzt sie die axiale Bewegung des Spannteils und verhindert, daß dieses nach unten aus der Ausnehmung des unteren Schenkels herausfallen kann. Damit ist ein Verlierschutz gegeben.

Zur Erleichterung des Einfädelns des Befestigungsbolzens in die Gewindebohrung des Spannteils, weist das Spannteil vorzugsweise eine Bohrung auf, deren oberer Abschnitt als zylindrische Zentrierbohrung zur axial verschiebbaren Aufnahme des unteren Endes des Befestigungsbolzens ausgebildet ist. An die Zentrierbohrung schließt sich ein Gewindeabschnitt zum Einschrauben des Befestigungsbolzens an. Es kann auch zweckmäßig sein das freie Ende des Befestigungsbolzen mit einer Einführhilfe, beispielsweise einer kegelförmigen Phase zu versehen.

Es ist auch von Vorteil, wenn das Spannteil eine sich nach unten an den Gewindeabschnitt anschließende im wesentlichen axiale Öffnung, beispielsweise eine zylindrische Bohrung aufweist, deren Querschnitt wesentlich größer ( beispielsweise doppelt so groß) ist als der Querschnitt der Gewindebohrung. Die axiale Länge des Spannteils soll ausreichend groß sein, so daß der vollständig in das Spannteil eingeschraubte Befestigungsbolzen (Spannstellung) noch innerhalb der Öffnung endet und nicht aus dem Spannteil herausschaut. Diese Ausbildung bietet einen Schutz des Gewindes vor Verschmutzung und Beschädigungen.

Um das Spannteil unverlierbar in der Ausnehmung des unteren Schenkels zu halten, ist ein als Nase, Stift oder dergleichen ausgebildeter Vorsprung vorgesehen, der im Bereich des unteren Endes des Spannteils radial über dessen Außenkontur vorsteht. Der Vorsprung wirkt mit einem Anschlag im unteren Schenkel zusammen und begrenzt die axiale Bewegung des Spannteils nach oben.

Gemäß einer besonders bevorzugten Ausgestaltung der Erfindung weist der Befestigungsbolzen einen dem Abstützen an dem oberen Schenkel dienenden Kopfbereich (beispielsweise Schraubenkopf mit Unterlegscheibe), einen im wesentlichen zylindrischen mittleren Schaft und einen sich hieran anschließenden Gewindeabschnitt auf. Der zylindrische Abschnitt trägt eine verdrehbare Distanzhülse, deren eines Ende sich an dem Kopfbereich abstützt und die durch ein Sicherungselement gegen axiale Verschiebung am Befestigungsbolzen festgelegt und unverlierbar gesichert ist. Als Sicherungselement kann ein in eine Nut des Befestigungsbolzens eingesetzter Sicherungsring oder dergleichen dienen. Die Distanzhülse ist in der im wesentlichen zylindrisch ausgebildeten Ausnehmung des oberen Schenkels verschiebbar geführt. Die Distanzhülse ist so lang ausgebildet, daß sie sich dann, wenn sich der Kopfbereich des Befestigungsbolzens am oberen Schenkel abstützt, in die Einführöffnung hineinragt, so daß sie in die Aufnahmeausnehmung des Tragelements eingreifen kann. Der Außendurchmesser der Distanzhülse und die Aufnahmeausnehmung des Tragelements sind aufeinander abgestimmt, so daß die Distanzhülse in der Aufnahmeausnehmung verschiebbar aufgenommen werden kann. Diese Ausgestaltung ermöglicht es, daß bei der Montage der Befestigungsbolzen ohne Kraftaufwand einsetzbar ist und daß er im wesentlichen lediglich auf Zugkräfte und nicht auf Scherkräfte beansprucht wird. Damit kann eine kostengünstige Standardschraube mit vergleichsweise kleinen Abmessungen verwendet werden.

Eine weitere vorteilhafte Ausgestaltung der Erfindung sieht vor, daß der obere Schenkel in seinem außerhalb seiner Ausnehmung liegenden Randbereich eine nach unten zur Einführöffnung gerichtete Erhebung oder Schwelle und daß die Rückwandung der Einführöffnung in ihrem oberen Bereich eine Vertiefung aufweist. Ferner erstreckt sich im rückwandigen Bereich der Einführöffnung in den oberen Schenkel eine nach oben gerichtete Nut, die der Aufnahme einer nach oben gerichteten Nase des Tragelements dient. Wenn das Tragelement von der Einführöffnung aufgenommen wird, stützt sich das Zusatzgewicht über seinen Randbereich auf der oberen Fläche des Tragelements und mit seiner Rückwandung an der Stirnseite des Tragelements ab. Die erfindungsgemäß ausgebildeten Freiräume hinter dem Randbereich und in der Rückwandung führen dazu, daß sich beim Einklemmen des Tragelements ein Hebelarm ausbildet, der die Anlagekraft der Gewichtskraft unterstützt.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: einen Ackerschlepper, der ein erfindungsgemäßes Zusatzgewicht trägt,
- Fig. 2: den Querschnitt durch einen Teil eines erfindungsgemäßen Zusatzgewichts mit Befestigungsmitteln und durch ein Tragelement in einem ersten Montagezustand,
- Fig. 3: eine Darstellung gemäß Fig. 2 in einem zweiten Montagezustand,
- Fig. 4: eine Darstellung gemäß Fig. 2 in einem dritten Montagezustand und
- Fig. 5: eine Darstellung gemäß Fig. 2 in einem vierten Montagezustand.

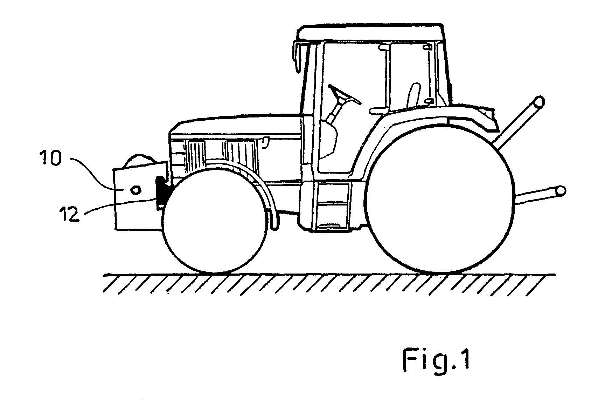

Aus Fig. 1 geht die Seitenansicht eines Ackerschleppers hervor, an dessen Vorderseite ein Tragelement 12, insbesondere ein Grundgewicht befestigt ist. An das Grundgewicht 12 ist ein erfindungsgemäßes Zusatzgewicht 10, das der Ballastierung des Schleppers dient, eingehängt.

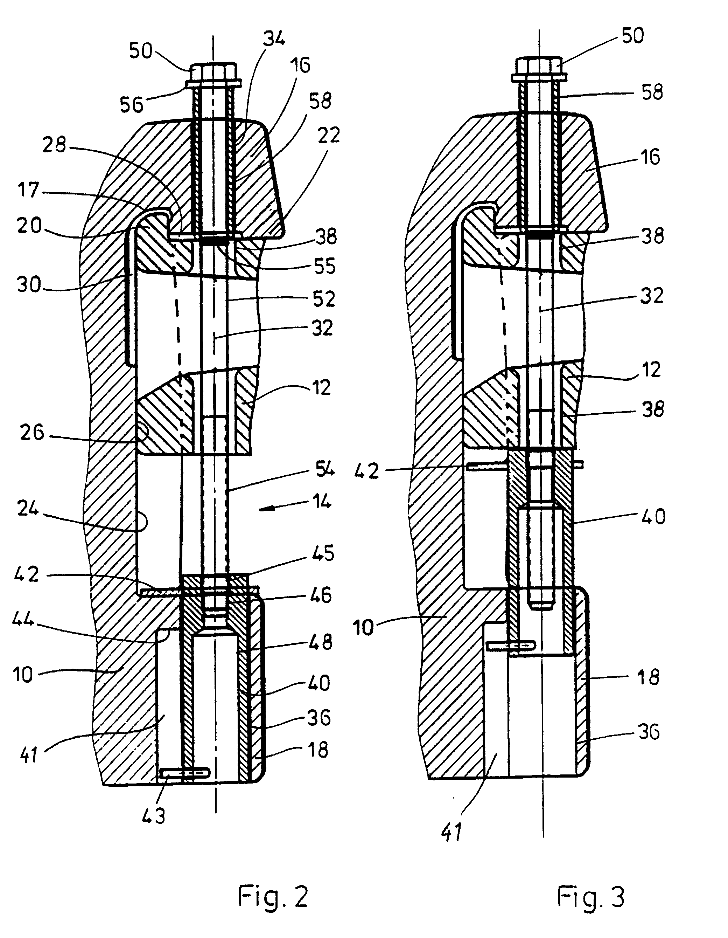

In Fig. 2 ist ein Ausschnitt eines Zusatzgewichtes mit 10 bezeichnet. Die gemäß Fig. 2 rechte Seite des Zusatzgewichtes 10 ist einem hier nicht dargestellten Fahrzeug zugewandt, an dem ein Tragelement 12 befestigt ist. Das Tragelement 12 greift in eine seitlich offene Einführöffnung 14 des Zusatzgewichtes ein. Die Einführöffnung 14 ist im wesentlichen U-förmig ausgebildet und wird durch einen oberen Schenkel 16 und einen unteren Schenkel 18 begrenzt.

Der obere Schenkel 16 ist hakenförmig ausgebildet und enthält eine nach oben gerichtete Nut 17. Er stützt mit der Seitenfläche der Nut 17 in horizontaler Richtung an einer nach oben weisenden Nase 20 des Tragelements 12 ab. Der obere Schenkel 16 weist in einem äußeren Randbereich der Einführöffnung 14 eine nach unten in die Einführöffnung 14 gerichtete Erhebung 22 oder Schwelle auf, die der vertikalen Abstützung des Grundgewichtes 10 auf dem Tragelement 12 dient. Ferner stützt sich ein vorstehender Teil der Rückwandung 24 der Einführöffnung 14 an einer unteren Stirnfläche 26 des Tragelements 12 ab. Zwischen den genannten Abstütz- oder Anlageflächen (17 und 20; 22; 24 und 26) sind das Tragelement 12 und das Zusatzgewicht 10 durch Zwischen- oder Freiräume 28, 30 zueinander beabstandet. Durch die Ausbildung der Freiräume 28, 30 ergibt sich zwischen der Erhebung 22 und der Achse des später näher beschriebenen Befestigungsbolzens 32 ein Hebelarm, der beim später beschriebenen Einklemmen des Tragelements 12 die Anlagekraft zwischen der Rückwandung 24 des Zusatzgewichtes 10 und der Stirnfläche 26 des Tragelements 12 unterstützt und eine spielfreie Befestigung des Zusatzgewichts 10 ermöglicht.

Durch den oberen Schenkel 16 und den unteren Schenkel 18 erstrecken sich im wesentlichen senkrecht ausgerichtete Ausnehmungen 34 und 36, die miteinander und mit einer senkrechten Aufnahmeausnehmung 38 im Tragelement 12 fluchten, sofern das Zusatzgewicht 10 an dem Tragelement 12 angehängt ist. Die Ausnehmungen 34, 36 und die Aufnahmeausnehmung 38 sind im wesentlichen zylindrisch ausgebildet. Der Durchmesser der Aufnahmeausnehmung 38 kann geringfügig größer als der Durchmesser der Ausnehmung 34 des oberen Schenkels 16 sein.

Die Ausnehmung 36 des unteren Schenkels 18 nimmt ein als Schraubbüchse ausgebildetes zylindrisches Spannteil 40 auf, das sich in der Ausnehmung 36 vertikal bzw. axial verschieben läßt.

An dem oberen Ende des Spannteils 40, das in die Eintrittsöffnung 14 hineinragt, ist eine Lasche 42 befestigt. Unabhängig von der vertikalen Lage des Spannteils 40 stützt sich die Lasche 42 mit einem Ende an der Rückwandung 24 ab und verhindert so ein Verdrehen des Spannteils 40. Ferner sichert die Lasche 42 das Spannteil 40 gegen ein Herausfallen aus der Ausnehmung 36. Dem Verlierschutz dient ferner ein Stift 43 der am unteren Ende des Spannteils 40 von diesem seitlich vorsteht. Der Stift 43 ragt in eine seitliche Nut 41 in der ansich zylindrisch ausgebildeten Ausnehmung 36 des unteren Schenkels 18. Die Nut 41 endet an einem Anschlag 44 und begrenzt damit die Bewegung des Spannteils 40 nach oben.

Das Spannteil 40 weist eine axiale Bohrung auf, deren oberer Abschnitt als zylindrische Zentrierbohrung 45 zur axial verschiebbaren Aufnahme des unteren Endes des Befestigungsbolzens 32 ausgebildet ist. An die Zentrierbohrung 45 schließt sich nach unten eine Gewindebohrung 46 an, in die sich der Befestigungsbolzen 32 einschrauben läßt. Die Gewindebohrung 46 geht in eine untere Zylinderbohrung 48 über, deren Durchmesser deutlich größer ist als der Durchmesser des Befestigungsbolzens 32. Die Länge des Spannteils 40 ist so gewählt, daß bei vollständig eingeschraubtem Befestigungsbolzen 32 (Fig. 3) dieser nicht aus der Zylinderbohrung 48 herausragt. Ferner soll das Spannteil 40 in seiner abgesenkten Stellung, in der die Lasche 42 auf dem unteren Schenkel 18 aufliegt, nicht über die untere Kontur des Zusatzgewichtes 10 vorstehen.

Der Befestigungsbolzen 32 hat einen Sechskantschraubkopf 50, einen sich daran anschließenden zylindrischen Schaft 52 und einen Gewindeabschnitt 54. Das untere Ende des Befestigungsbolzens 32 weist eine kegelförmige Phase auf, die das Einführen des Befestigungsbolzens 32 in die Bohrung des Spannteils 40 erleichtert. Zwischen dem Sechskantschraubkopf 50 und einem an dem Schaft 52 festgelegten Sicherungselement 55 sind eine Unterlegscheibe 56 und eine Distanzhülse 58 unverlierbar angeordnet. Das Sicherungselement 56 ist beispielsweise ein in eine im Schaft 52 ausgebildete umlaufende Nut eingesetzter Drahtring. Die Distanzhülse 58 läßt sich gegenüber dem Befestigungsbolzen 32 verdrehen. Sie wird gleitend von der Ausnehmung 34 im oberen Schenkel 16 aufgenommen. Die Länge der Distanzhülse 58 ist derart ausgelegt, daß sie in die Einführöffnung 14 hineinragt, sofern sich der Befestigungsbolzen 32 über die Unterlegscheibe 56 auf dem oberen Schenkel 16 abstützt, d. h. der Befestigungsbolzen 32 sich in seiner untersten Lage befindet. In dieser Stellung kann die Distanzhülse 58 in die Aufnahmeausnehmung 38 des Tragelements 12 eingreifen.

Das Zusatzgewicht 10 wird auf folgende Weise an dem Tragelement 12 montiert:

Zunächst wird der Befestigungsbolzen 32 aus den Ausnehmungen 34, 36 des Zusatzgewichtes 10 herausgenommen. Wie beschrieben verbleibt das Spannteil 40 ständig am Zusatzgewicht 10. Das Zusatzgewicht 10 wird durch geeignete Hilfsmittel angehoben und mit seiner Einführöffnung 14 an das Tragelement 12 angehängt, so daß die Ausnehmungen 34, 36 und die Aufnahmeausnehmung 38 in etwa fluchten. Nun wird der Befestigungsbolzen 32 in die obere Ausnehmung 34 und die Aufnahmeausnehmung 38 eingesetzt, in die Zentrierbohrung 45 des Spannteils 40 eingeführt und in die Gewindebohrung 46 eingeschraubt. Hierbei tritt die Distanzhülse 58 zunächst noch nicht in die Einführöffnung 14 bzw. die Aufnahmeausnehmung 38 ein (Fig. 2).

Beim Einschrauben des Befestigungsbolzens 32 bewegt sich das Spannteil 40 nach oben, bis seine obere Stirnseite an die Unterseite des Tragelements 12 anstößt (Fig. 3). Da der Querschnitt der Ausnehmungen 34, 38 wesentlich größer ist als der Querschnitt des Befestigungsbolzens 32, läßt sich der Befestigungsbolzen 32 auch dann ohne besondere Kraftanstrengung in die Ausnehmungen 34, 38 einsetzen und in das Spannteil 40 einschrauben, wenn die Ausnehmungen 34, 36 nicht genau mit der Aufnahemausnehmung 38 fluchten.

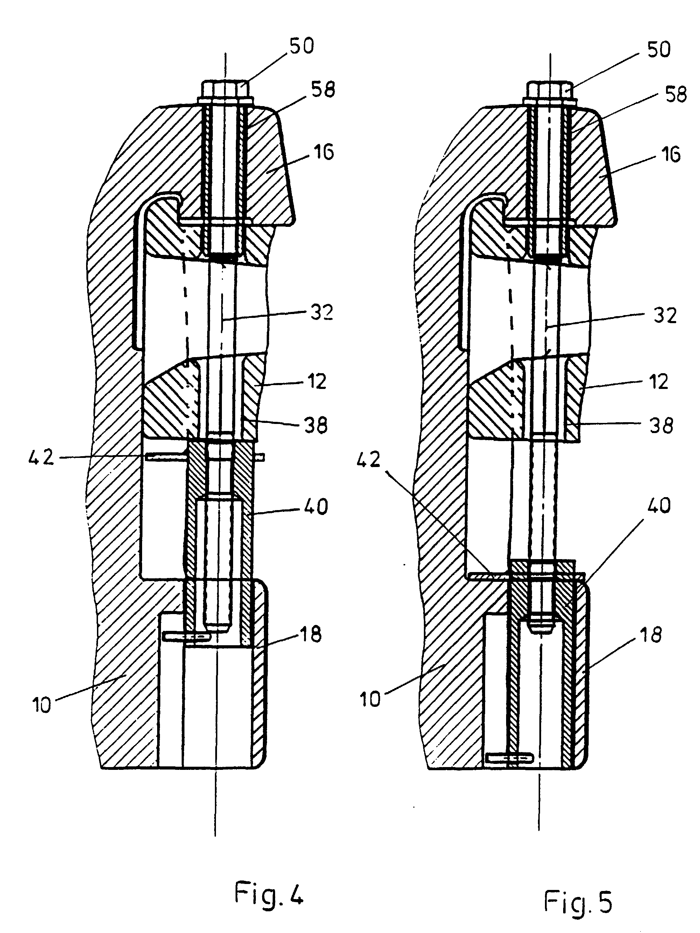

Beim weiteren Einschrauben des Befestigungsbolzens 32 unter Drehmoment stützt sich das Spannteil 40 am Tragelement 12 ab, so daß nun die Befestigungsschraube 32 mit der Spannhülse 58 nach unten bewegt wird. Dabei tritt die Spannhülse in die Aufnahmebohrung 38 des Tragelements 12 ein und zentriert diese zur oberen Ausnehmung 34, Damit wird das Zusatzgewicht 10 fein positioniert. Beim Erreichen des Normdrehmoments sind alle Teile miteinander verspannt (Fig. 4). Der oben beschriebene Hebelarm unterstützt die Anlagekraft der Gewichtskraft.

Beim Lösen der Verbindung bewegt sich zunächst das Spannteil 40 nach unten, bis sich die Lasche 42 auf dem unteren Schenkel 18 abstützt. Hierbei bleibt die Spannhülse 58 zunächst noch in der Aufnahmeausnehmung 38 (Fig. 5). Wird der Befestigungsbolzen 32 weiter heraus gedreht, so wird die Distanzhülse 58 aus der Aufnahmeausnehmung 38 gezogen, bis sich schließlich der Befestigungsbolzen 32 ohne Verklemmen herausziehen läßt.

## Patentansprüche

1. Zusatzgewicht zur Ballastierung eines landwirtschaftlichen oder industriellen Fahrzeugs, insbesondere eines Ackerschleppers, das wenigstens eine durch einen oberen Schenkel (16) und einen unteren Schenkel (18) begrenzte, seitlich offene Einführöffnung (14) aufweist, und das an ein fahrzeugseitiges Tragelement (12), beispielsweise an ein frontseitiges Grundgewicht, anhängbar ist, indem sich der obere Schenkel (16) des Zusatzgewichtes (10) auf dem in die Einführöffnung (14) hineinragenden Tragelement (12) abstützt, wobei sich in dem oberen Schenkel (16) und dem unteren Schenkel (18) des Zusatzgewichtes (10) wenigstens teilweise miteinander fluchtende, im wesentlichen senkrecht ausgerichtete Ausnehmungen (34, 36) erstrecken, die im eingehängten Zustand mit einer im wesentlichen senkrechten Aufnahmeausnehmung (38) im Tragelement (12) korrespondieren und die einen Befestigungsbolzen (32) aufnehmen, dadurch gekennzeichnet, daß der Befestigungsbolzen (32) am oberen Schenkel (16) axial abstützbar ausgebildet ist und einen Gewindeabschnitt (54) aufweist, und daß die Ausnehmung (36) des unteren Schenkels (18) ein axial verschiebbares Spannteil (40) aufnimmt, welches eine Gewindebohrung (46) enthält, in die der Gewindeabschnitt (54) des Befestigungsbolzens (32) einschraubbar ist, derart, daß sich beim Einschrauben des Befestigungsbolzens (32) das Spannteil (40) dem Tragelement (12) annähert und dieses gegen den oberen Schenkel (16) verspannt.

2. Zusatzgewicht nach Anspruch 1, dadurch gekennzeichnet, daß das Spannteil (40) als eine wenigstens abschnittsweise zylindrische Schraubbüchse ausgebildet ist, die in einer wenigstens teilweise zylindrisch ausgebildeten Ausnehmung (36) im unteren Schenkel (18) axial verschiebbar angeordnet ist.

3. Zusatzgewicht nach Anspruch 1 oder 2, dadurch gekennzeichnet, daß an einem oberen in die Eintrittsöffnung (14) hineinragenden Abschnitt des Spannteils (40) eine Lasche (42) befestigt ist, die mit einer Wandung (24) der Einführöffnung (14) in Eingriff tritt, um ein Verdrehen des Spannteils (40) bei dessen axialer Verschiebung zu verhindern.

4. Zusatzgewicht nach einem der Ansprüche 1 bis 3, dadurch gekennzeichnet, daß das Spannteil (40) eine Bohrung aufweist, deren oberer Abschnitt als zylindrische Zentrierbohrung (45) zur axialverschiebbaren Aufnahme des unteren Endes des Befestigungsbolzens (32) ausgebildet ist, und daß sich an die Zentrierbohrung (45) der Gewindebohrung (46) zum Einschrauben des Befestigungsbolzens (32) anschließt.

5. Zusatzgewicht nach einem der Ansprüche 1 bis 4, dadurch gekennzeichnet, daß das Spannteil (40) eine sich nach unten an die Gewindebohrung (46) anschließende im wesentlichen axiale Öffnung (48) aufweist, deren Querschnitt wesentlich größer ist als der Querschnitt der Gewindebohrung (46), und daß die axiale Länge des Spannteils (40) ausreichend groß ist, so daß der vollständig in das Spannteil (40) eingeschraubte Befestigungsbolzen (32) noch innerhalb der Öffnung (48) endet.

6. Zusatzgewicht nach einem der Ansprüche 1 bis 5, dadurch gekennzeichnet, daß im Bereich des unteren Endes des Spannteils (40) eine Nase, ein Vorsprung oder dergleichen (43) radial vorsteht die mit einem Anschlag (44) im unteren Schenkel (18) zusammenwirkt, um die axiale Bewegung des Spannteils (40) nach oben zu begrenzen.

7. Zusatzgewicht nach einem der Ansprüche 1 bis 6, dadurch gekennzeichnet, daß der Befestigungsbolzen (32) einen dem Abstützen an dem oberen Schenkel (16) dienenden Kopfbereich (50, 56), einen im wesentlichen zylindrischen mittleren Abschnitt (52) und einen Gewindeabschnitt (54) aufweist und daß der zylindrische Abschnitt (52) eine verdrehbare Distanzhülse (58) aufnimmt, die durch wenigstens eine Sicherung (55) gegen axiale Verschiebung am Befestigungsbolzen (32) festgelegt ist und die in der im wesentlichen zylindrisch ausgebildeten Ausnehmung (34) des oberen Schenkels (16) verschiebbar geführt ist.

8. Zusatzgewicht nach Anspruch 7, dadurch gekennzeichnet, daß die Distanzhülse (58) so lang ausgebildet ist, daß sie sich bei sich am oberen Schenkel abstützenden Befestigungsbolzen (32) in die Einführöffnung (14) erstreckt, um in die Aufnahmeausnehmung (38) des Tragelements (12) einzugreifen zu können.

9. Zusatzgewicht nach einem der Ansprüche 1 bis 8, dadurch gekennzeichnet, daß der obere Schenkel (16) in seinem außerhalb seiner Ausnehmung (34) liegenden Randbereich eine zur Einführöffnung (14) gerichtete Erhebung (22) aufweist, daß die Rückwandung (24) der Einführöffnung (14) in ihrem oberen Bereich eine Vertiefung (30) aufweist und daß sich im rückwandigen Bereich der Einführöffnung (14) in den oberen Schenkel (16) nach oben eine Nut (17) erstreckt, die der Aufnahme einer nach oben gerichteten Nase (20) des Tragelements (12) dient.

10. Zusatzgewicht nach einem der Ansprüche 1 bis 9, dadurch gekennzeichnet, daß das Zusatzgewicht (10) aus mehreren, vorzugsweise drei nebeneinander angeordneten, aneinander befestigten und gemeinsam handhabbaren Teilgewichten besteht und daß sich die in dem oberen und unteren Schenkel (16, 18) erstreckenden Ausnehmungen (34, 36) in einem mittleren Teilgewicht befinden.

## Claims

1. A supplementary weight for ballasting an agricultural or industrial vehicle, especially an agricultural tractor, which has at least one entry opening (14) open at the side and bounded by an upper limb (16) and a lower limb (18) and which can be suspended on a support element (12) on a vehicle, for example on a front end base weight, in that the upper limb (16) of the supplementary weight (10) is supported on the support element (12) projecting into the entry opening (14), wherein substantially perpendicular receiving recesses (34, 36) at least partially in alignment with one another extend into the upper limb (16) and the lower limb (18) of the supplementary weight (10) and correspond in the suspended state with a substantially perpendicular receiving opening (38) in the support element (12) and which receive a fixing bolt (32), characterized in that the fixing bolt (32) is formed to be supportable axially on the upper limb (16) and has a threaded section (54), and in that the recess (36) of the lower limb (18) receives an axially displacable clamping part (40), which has a threaded bore (46), into which the threaded section (54) of the fixing bolt (32) can be screwed, so that on screwing the fixing bolt (32) in, the clamping part (40) approaches the support element (12) and clamps this against the upper limb (16).

2. A supplementary weight according to claim 1, characterized in that the clamping part (40) is formed as a threaded bush which is cylindrical at least over one section, which is arranged to slide axially in an at least partially cylindrically shaped recess (36) in the lower limb (18).

3. A supplementary weight according to claim 1 or 2, characterized in that a tongue (42) is fixed on to an upper section of the clamping part (40) projecting into the entry opening (14) and comes into engagement with a wall (24) of the entry opening (14), in order to prevent rotation of the clamping part (40) during axial displacement thereof.

4. A supplementary weight according to any of claims 1 to 3, characterized in that the clamping part (40) has a bore, whose upper section is formed at a cylindrical centring bore (45) for axially movable reception of the lower end of the fixing bolt (32), and in that the threaded bore (46) for screwing in the fixing bolt (32) adjoins the centring bore (45).

5. A supplementary weight according to any of claims 1 to 4, characterized in that the clamping part (40) has a substantially axial opening (48) adjoining the threaded bore (46) below, its cross-section being substantially greater than the cross-section of the threaded bore (46), and in that the axial length of the clamping part (40) is sufficiently great for fixing bolt (32) still to terminate within the opening (48) when screwed fully into the clamping part (40).

6. A supplementary weight according to any of claims 1 to 5, characterized in that a nose, a projection or the like (43) projects radially in the region of the lower end of the clamping part (40) and cooperates with a stop (44) in the lower limb (18), in order to limit the upwards axial movement of the clamping part (40).

7. A supplementary weight according to any of claims 1 to 6, characterized in that the fixing bolt (32) comprises a head region (50, 56) for abutment against the upper limb (16), a substantially cylindrical middle section (52) and a threaded section (54) and in that the cylindrical section (52) receives a rotatable spacer sleeve (58), which is fixed against axial displacement on the fixing bolt (32) by at least one retainer (55) and which is guided slidably in the substantially cylindrically formed recess (34) of the upper limb (16).

8. A supplementary weight according to claim 7, characterized in that the spacer sleeve (58) is of such length that it extends into the entry opening (14) when the fixing bolt (32) abuts the upper limb (16), in order to be able to engage in the receiving opening (38) of the support element (12).

9. A supplementary weight according to any of claims 1 to 8, characterized in that the upper limb (16) comprises a raised part (22) in its edge region lying outside its recess (34), aligned with the entry opening (14), in that the rear wall (24) of the entry opening (14) has a depression (30) in its upper region, and in that a groove (17) extends upwards into the upper limb (16) in the rear wall region of the entry opening (14) and serves to receive an upwardly directed nose (20) of the support element (12).

10. A supplementary weight according to any of claims 1 to 9, characterized in that the supplementary weight (10) consists of a plurality, preferably three, part weights arranged beside each other, fixed to one another and which can be handled together, and in that the recesses (34, 36) extending in the upper and lower limbs (16, 18) are located in a central part weight.

## Revendications

1. Poids additionnel servant à lester un véhicule agricole ou industriel, notamment un tracteur agricole, qui comporte au moins une ouverture d'introduction (14), qui est limitée par une branche supérieure (16) et par une branche inférieure (18) et est ouverte latéralement, et qui peut être accroché à un élément de support (12) situé sur le véhicule, par exemple à un poids de base frontal, par le fait que la branche supérieure (16) du poids additionnel (10) prend appui sur l'élément de support (12), qui pénètre dans l'ouverture d'introduction (14), et dans lequel dans la branche supérieure (16) et dans la branche inférieure (18) du poids additionnel (10) s'étendent des évidements (34, 36), qui sont alignés au moins partiellement, sont orientés essentiellement verticalement, correspondent, à l'état accroché, à un évidement de logement essentiellement vertical (38) dans l'élément de support (12) et logent un boulon de fixation (39), caractérisé en ce que le boulon de fixation (32) est agencé de manière à pouvoir prendre appui axialement sur la branche supérieure (16) et comporte une partie filetée (54), et que l'évidement (36) de la branche inférieure (18) loge une partie de serrage (40) déplaçable axialement et qui contient un perçage taraudé (46) dans lequel la partie filetée (54) du boulon de fixation (32) peut être vissée, de telle sorte que lors du vissage du boulon de fixation (39), la partie de serrage (40) se rapproche de l'élément de support (12) et serre ce dernier contre la branche supérieure (16).

2. Poids additionnel selon la revendication 1, caractérisé en ce que la partie de serrage (40) est agencée sous la forme d'un manchon vissable, cylindrique au moins par intervalles, qui est disposé de manière à être déplaçable axialement dans un évidement (36), qui est au moins partiellement cylindrique, et est formé dans la branche inférieure (18).

3. Poids additionnel selon la revendication 1 ou 2, caractérisé en ce que sur une partie supérieure, qui pénètre dans l'ouverture d'introduction (14), de la partie de serrage (40) est fixée une patte (42) qui coopère avec une paroi (24) de l'ouverture d'introduction (14), de manière à empêcher une rotation de la partie de serrage (40) lors de son déplacement axial.

4. Poids additionnel selon l'une des revendications 1 à 3, caractérisé en ce que la partie de serrage (40) comporte un perçage, dont la partie supérieure est agencée sous la forme d'un perçage cylindrique de centrage (45) servant à loger, avec possibilité de déplacement axial, l'extrémité inférieure du boulon de fixation (32), et que le perçage de centrage (45) se raccorde au perçage taraudé (46) pour le vissage du boulon de fixation (32).

5. Poids additionnel selon l'une des revendications 1 à 4, caractérisé en ce que la partie de serrage (40) possède une ouverture sensiblement axiale (48), qui se raccorde vers le bas au perçage taraudé (48) et dont la section transversale est nettement supérieure à la section transversale du perçage taraudé (36), et que la longueur axiale de la partie de serrage (40) est suffisamment grande pour que le boulon de fixation (32) complètement vissé dans la partie de serrage (40) se termine encore à l'intérieur de l'ouverture (48).

6. Poids additionnel selon l'une des revendications 1 à 5, caractérisé en ce que dans la zone de l'extrémité inférieure de la partie de serrage (40) fait saillie un bec, une partie saillante ou analogue (43), qui coopère avec une butée (44) située dans la branche inférieure (18) de manière à limiter le déplacement axial de la partie de serrage (40) vers le haut.

7. Poids additionnel selon l'une des revendications 1 à 6, caractérisé en ce que le boulon de fixation (32) possède une partie de tête (50, 56), qui est destinée à prendre appui sur la branche supérieure (16), une partie médiane essentiellement cylindrique (52) et une partie filetée (54) et que la partie cylindrique (52) reçoit une douille d'entretoisement rotative (58), qui est fixée par au moins un système de fixation (55) à l'encontre d'un déplacement axial sur le boulon de fixation (32) et qui est guidée de manière à être déplaçable dans l'évidement agencé avec une forme essentiellement cylindrique (34) de la branche supérieure (16).

8. Poids additionnel selon la revendication 7, caractérisé en ce que la douille d'entretoisement (58) est agencée avec une longueur telle qu'elle s'étend dans l'ouverture d'introduction (14) lorsque le boulon de fixation (32) prend appui sur la branche supérieure, de manière à pouvoir s'engager dans l'évidement de logement (38) de l'élément de support (12).

9. Poids additionnel selon l'une des revendications 1 à 8, caractérisé en ce que la branche supérieure (16) comporte, dans sa partie marginale située à l'extérieur de son évidement (34), un bossage (22), qui est dirigé vers l'ouverture d'introduction (14), que la paroi arrière (24) de l'ouverture d'introduction (14) possède un renfoncement (30) dans sa partie supérieure et que dans la partie arrière de l'ouverture d'introduction (14) formée dans la branche supérieure (16) s'étend, vers le haut, une rainure (17), qui sert à loger un bec (20), dirigé vers le haut, de l'élément de support (12).

10. Poids additionnel selon l'une des revendications 1 à 9, caractérisé en ce que le poids additionnel (10) est constitué par plusieurs, de préférence trois poids partiels disposés côte-à-côte, fixés entre eux et pouvant être manipulés en commun et que les évidements (34, 36), qui s'étendent dans les branches supérieure et inférieure (16, 18), sont situées dans un poids partiel médian.
